# EUROPÄISCHE PATENTSCHRIFT

(11) **EP 3 615 832 B1**
(45) Veröffentlichungstag und Bekanntmachung des Hinweises auf die Patenterteilung: **02.06.2021**
(21) Anmeldenummer: 18720541.4
(22) Anmeldetag: 17.04.2018
(51) Int. Cl.: F16D 65/10

(54) **BREMSTROMMEL SOWIE VERFAHREN ZUR HERSTELLUNG EINER DERARTIGEN BREMSTROMMEL**
BRAKE DRUM AND METHOD FOR PRODUCING SUCH A BRAKE DRUM
TAMBOUR DE FREIN AINSI QUE PROCÉDÉ PERMETTANT DE FABRIQUER UN TAMBOUR DE FREIN DE CE TYPE

(30) Priorität: 27.04.2017 DE 102017109059
(43) Veröffentlichungstag der Anmeldung: 04.03.2020
(73) Patentinhaber: KS HUAYU AluTech GmbH, 74172 Neckarsulm (DE)
(72) Erfinder: SCHRAMM, Leander, 07407 Rudolstadt (DE); KLIMESCH, Christian, 76229 Karlsruhe (DE); MÖDING, Herbert, 74177 Bad Friedrichshall (DE)
(74) Vertreter: terpatent Patentanwälte ter Smitten Eberlein-Van Hoof Rütten Daubert
(86) Internationale Anmeldenummer: PCT/EP2018/059761
(87) Internationale Veröffentlichungsnummer: WO 2018/197264

(56) Entgegenhaltungen:
- DE-A1-102011 054 484
- GB-A- 866 880
- US-A- 2 978 073
- US-A1- 2006 027 429

## Beschreibung

Die Erfindung betrifft eine Bremstrommel für ein Fahrzeug mit einem Reibring, der an seiner radialen Außenfläche entlang des Umfangs verlaufende Nuten aufweist und an dessen radialer Außenfläche eine Beschichtung ausgebildet ist und einem Trommelkörper, der an die radiale Außenfläche des Reibrings angegossen ist, so dass die Nuten mit dem Material des Trommelkörpers gefüllt sind, sowie ein Verfahren zur Herstellung einer derartigen Bremstrommel, bei dem ein Reibring aus Grauguss, Stahl, einem Metall-Matrix-Verbundwerkstoff oder einer Schwermetalllegierung gegossen wird, anschließend die radiale Außenfläche des Reibrings zur Einbringung von Nuten mechanisch bearbeitet wird, woraufhin die mechanisch bearbeitete Außenfläche mit Zink oder einer Zinkbasislegierung, Nickel oder einer Aluminiumbasislegierung beschichtet wird und abschließend ein Trommelkörper aus einer Aluminium-Silizium-Legierung oder einer Aluminium-Magnesium-Legierung an die radiale Außenfläche des Reibrings angegossen wird. So eine Bremstrommel geht z.B. aus US 2006/027429 A1 hervor.

Bremstrommeln sowohl für Kraftfahrzeuge als auch für Schienenfahrzeuge aber auch für Zweiräder sind allgemein bekannt und werden in einer Vielzahl von Anmeldungen beschrieben. Beim Bremsvorgang greift dabei jeweils eine Bremsbacke in reibschlüssigen Kontakt mit einer Reibfläche der Bremstrommel, die üblicherweise an einer radialen Innenfläche ausgebildet ist. Die üblichen Bremstrommeln werden zumeist aus Grauguss oder Eisen gegossen, da eine hohe Festigkeit, Formsteifigkeit und Wärmeleitung aufgrund der beim Bremsvorgang hohen auftretenden Kräfte gefordert ist.

Gleichzeitig steigt jedoch seit Jahren die Forderung zur Verringerung des Kraftstoffverbrauches und damit einhergehend der Zwang zur Gewichtseinsparung. Aus diesem Grund wurden Bremstrommeln aus einem Leichtmetall vorgeschlagen, welche einen Reibkörper aufweisen, der die auftretenden Kräfte aufnimmt und eine ausreichende Verschleiß- und Formfestigkeit aufweist.

Entsprechend wird in der DE 197 23 036 B4 eine Bremstrommel offenbart, deren Trommelkörper aus einem Leichtmetall hergestellt ist und der mit einem Reibring formschlüssig verbunden ist, wobei der Formschluss Hinterschneidungen aufweist. Die Verbindung zwischen den beiden Körpern erfolgt durch Eingießen des Reibrings in den Grundkörper. Bei Erwärmung im Betrieb oder durch Schrumpfung nach dem Gießen erfolgt eine unterschiedliche Ausdehnung der beiden Teile, was zu Relativbewegungen der beiden Bauteile zueinander und somit zum Lösen führen kann.

Aus diesem Grund wird in der DE 10 2010 055 162 A1 ein Eingussbauteil offenbart, welches beispielsweise ein Reibring für eine Bremstrommel ist. Dieser Reibring kann zunächst spanend aufgeraut und anschließend mit einer galvanisch aufgebrachten Beschichtung aus Nickel versehen werden, bevor an den Reibring der Trommelkörper angegossen wird. Durch die Beschichtung wird die metallische Haftung des Trommelkörpers am Reibring deutlich verbessert. Dennoch kann ein Lösen aufgrund der angreifenden Kräfte nicht sicher verhindert werden.

Es stellt sich daher die Aufgabe, eine Bremstrommel und ein Verfahren zur Herstellung einer derartigen Bremstrommel zur Verfügung zu stellen, mit denen eine lange Lebensdauer der Bremstrommel bei geringem Gewicht sichergestellt werden kann, indem ein Lösen des Reibkörpers vom Trommelkörper zuverlässig verhindert wird.

Diese Aufgabe wird durch eine Bremstrommel mit den Merkmalen des Anspruchs 1 und ein Verfahren zur Herstellung einer derartigen Bremstrommel mit den Merkmalen des Anspruchs 13 gelöst.

Dadurch, dass am Reibring ein erster axialer Abschnitt ausgebildet ist, in dem die Nuten zum nächstliegenden ersten axialen Ende des Reibrings geneigt ausgebildet sind und ein zweiter axialer Abschnitt ausgebildet ist, in dem die Nuten zur zum ersten Abschnitt entgegengesetzten Richtung geneigt ausgebildet sind, wobei die Nuten in radialer Richtung betrachtet Hinterschneidungen aufweisen, wird erreicht, dass bei der unterschiedlichen Schrumpfung durch die verschiedenen Ausdehnungskoeffizienten der verwendeten Werkstoffe nach dem Angießen eine feste Verbindung zwischen dem Trommelkörper und dem Reibring bestehen bleibt, da die entstehenden Aufschrumpfkräfte, die am Reibring an den axialen Enden in entgegengesetzter Richtung wirken, in beiden Wirkrichtungen durch die geneigten Nuten aufgenommen werden können. Zusätzlich wird eine mechanische Verklammerung durch die Hinterschneidungen hergestellt. Dieser Vorteil ergibt sich auch für das entsprechende Verfahren, bei dem die Nuten in einem ersten Abschnitt und in einem zweiten Abschnitt gegenläufig geneigt zueinander in die radiale Außenfläche des Reibrings eingebracht werden, und dabei in radialer Richtung betrachtet Hinterschneidungen ausgebildet werden, bevor der Reibring umgossen wird. Es entstehen Aufschrumpfspannungen, durch die die Festigkeit der Verbindung deutlich erhöht wird. Die bestehende Beschichtung verbessert die metallurgische Anbindung des Reibrings an den Trommelkörper. Die Hinterschneidungen erzeugen eine Bindungskraft in radialer Richtung, wodurch die Verbundfestigkeit zusätzlich erhöht wird.

Vorzugsweise sinkt der Neigungswinkel der Nuten zur Mittelachse des Reibrings im ersten Abschnitt mit kürzer werdendem Abstand zum nächstliegenden ersten axialen Ende und der Neigungswinkel der Nuten im zweiten Abschnitt mit kürzer werdendem Abstand zum entgegengesetzten zweiten axialen Ende. Es wurde festgestellt, dass mit etwa in der Mitte des Reibrings im Wesentlichen nur radial wirkende Kontraktionskräfte auftreten, während ein axialer Anteil dieser Kontraktionskräfte zu den axialen Enden des Reibrings hin wächst. Durch die dort immer steiler angestellten Flanken der Nuten entspricht deren Erstreckungsrichtung im Wesentlichen der Richtung der resultierenden Aufschrumpfkraft an jeder Position, wodurch diese Aufschrumpfkräfte optimal durch die Struktur aufgenommen wird, was die Verbundfestigkeit deutlich erhöht.

In einer möglichen Ausführungsform weist der Reibring einen dritten Abschnitt auf, in dem keine Nuten ausgebildet sind und der sich vom zweiten Abschnitt aus zum entgegensetzten zweiten axialen Ende erstreckt. Durch eine derartige Ausführung wird der Bearbeitungsbereich auf den im Betrieb belasteten Bereich beschränkt, wodurch Bearbeitungskosten gesenkt werden.

Es ist vorteilhaft, wenn die Nuten in Umfangrichtung verlaufen und eine Tiefe von 0,03 bis 2mm aufweisen. Diese Tiefe reicht aus, um eine zuverlässige Anbindung sicherzustellen, ohne dass zu hohe Bearbeitungskosten entstehen. Des Weiteren bleibt bei dieser Nuttiefe eine zuverlässige Füllung der Nuten auch bei Verwendung von Hinterschneidungen erhalten.

Eine besonders einfache Bearbeitung ergibt sich, wenn die Nuten in den beiden Abschnitten gegenläufig zueinander gewindeförmig in Umfangrichtung verlaufen.

Alternativ sind die Nuten im ersten Abschnitt gegenläufig zu den Nuten im zweiten Abschnitt und benachbarte Nuten in einem konstanten Abstand zueinander axial hintereinander liegend zueinander angeordnet. Gute Ergebnisse werden erzielt, wenn die Nuten einen Öffnungswinkel zwischen den beiden begrenzenden Flanken von 20° bis 40° aufweisen. In diesem Bereich ist sowohl eine vollständige Füllung der Nuten als auch eine gute Bearbeitbarkeit gegeben.

Vorteilhafterweise weisen die Nuten einen Neigungswinkel zwischen der Mittelache und der vorlaufenden Flanke der Nut von 20° bis 60° auf, was im Wesentlichen den Kraftwirkungsrichtungen der Aufschrumpfkräfte entspricht. Diese Neigungswinkel eignen sich zur Füllung der Nuten auch für einen Anguss mit geringerem Gießdruck, wie im Schwerkraft- oder Niederdruckguss.

Bei diesen Gießverfahren ist es besonders vorteilhaft, wenn der Neigungswinkel der vorlaufenden Flanke jeder Nut dem Neigungswinkel der nachlaufenden Flanke entspricht, da durch diese Rautenform die Füllung dieser Nuten deutlich vereinfacht wird und somit in den Gießprozessen mit geringem Druck ebenfalls zu guten Anbindungsergebnissen führt.

Vorzugsweise ist der Reibring aus Grauguss, Stahl, einem Metall-Matrix-Verbundwerkstoff oder einer Schwermetalllegierung hergestellt und der Trommelkörper aus einer Aluminiumsilizium- oder einer Aluminium-Magnesium-Legierung hergestellt. Der Reibring weist eine ausreichende thermische Belastbarkeit und einen geringen Abrieb im Bremsbetrieb auf, während die Leichtmetalllegierungen ein geringes Gewicht und eine gute Gießbarkeit aufweisen.

Die Legierung des Trommelkörpers sollte vorteilhafterweise einen Nickelanteil und einen Kupferanteil von unter 0,05 Gew.% aufweisen, wodurch das Korrosionsverhalten des Werkstoffs deutlich verbessert wird.

In einer bevorzugten Ausführungsform der Erfindung weist die Beschichtung eine Schichtdicke von 0,01mm bis 0,8mm auf und besteht aus Zink, einer Zinkbasislegierung, Nickel oder einer Aluminiumbasislegierung. Durch die Verwendung einer derartigen Beschichtung wird die metallurgische Bindung zwischen dem Reibring und dem Trommelkörper deutlich verbessert und eine Spaltbildung auch nach dem Schrumpfprozess zuverlässig verhindert, so dass im Betrieb keine Korrosionsprozesse im Innern auftreten können und eine gleichmäßige Kraftübertragung und Wärmeabfuhr hergestellt wird.

Die Beschichtung wird vorzugsweise durch thermisches Spritzen, galvanische Prozesse oder durch Verzinken aufgebracht. Durch diese Beschichtungen wird jeweils die metallurgische Bindung des Grauguss- oder Stahlreibrings an die Aluminiumlegierung des Trommelkörpers deutlich verbessert.

Besonders gut eignet sich zur Herstellung des Trommelkörpers das Druckgussverfahren, durch welches die Füllung der hinterschnittenen Strukturen am Reibring sichergestellt wird.

Um zusätzlich sicherzustellen, dass bei Verwendung einer thermischen Spritzschicht als Beschichtung, diese einen guten Verbund mit dem Reibring eingeht, wird die radiale Außenfläche des Reibrings zuvor gestrahlt oder chemisch behandelt.

Vor einem galvanischen Aufbringen der Beschichtung wird zur Verbesserung der Anbindung an den Reibring dessen radiale Außenfläche zunächst geätzt oder gebeizt und anschießend mit Elektrolyten behandelt.

Eine Verbesserung der Anbindung einer galvanisch aufgebrachten Beschichtung wird auch erzeugt, wenn eine Nickelschicht auf die Außenfläche vor dem galvanischen Beschichten aufgetragen wird.

Mit der erfindungsgemäßen Bremstrommel und dem Verfahren zur Herstellung einer derartigen Bremstrommel wird bei geringem Gewicht und einfacher und kostengünstiger Herstellbarkeit eine hohe Lebensdauer der Bremstrommel sichergestellt, wodurch der Kraftstoffverbrauch von Fahrzeugen reduziert wird. Dabei wird eine optimierte Anbindung des Trommelkörpers am Reibring hergestellt, indem diese Anbindung sowohl mechanisch durch die Nutzung der Aufschrumpfkräfte als auch metallurgisch durch die Verwendung der verschiedenen Beschichtungen verbessert wird. Zusätzlich wird Korrosion oder Spaltbildung zuverlässig vermieden, was die Lebensdauer einer derartigen Trommelbremse erhöht.

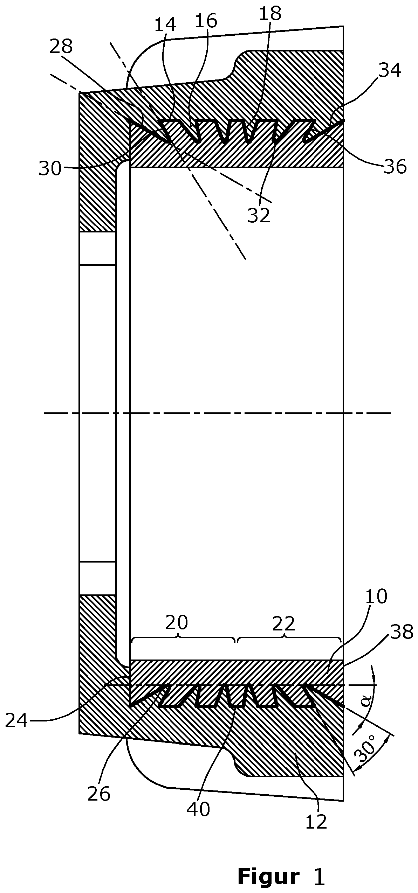

Im Folgenden wird eine erfindungsgemäße Trommelbremse sowie das erfindungsgemäße Verfahren zur Herstellung einer solchen beispielhaft anhand der Figur erklärt.

Die Figur zeigt schematisch eine Seitenansicht einer Bremstrommel in geschnittener Darstellung.

Die in der Figur dargestellte Bremstrommel besteht aus einem Reibring 10, an den ein Trommelkörper 12 angegossen ist. Der Reibring 10 wird zunächst aus Grauguss, Stahl, einem Metall-Matrix-Verbundwerkstoff oder einer Schwermetalllegierung gegossen und dient im späteren Einsatz als Reibfläche zum Bremsen für ein Kraftfahrzeug, so dass eine erhöhte Reib- und Wärmebelastung des Reibrings 10 vorliegt.

Aus diesem Grund muss der Reibring 10 eine hohe Verbundfestigkeit zum angegossen Trommelkörper 12, der aus einer Aluminiumsilizium- oder einer Aluminium-Magnesium-Legierung besteht und mittels eines Druckgussverfahrens an den Reibring 10 angegossen wird, aufweisen. Das Material des Trommelkörpers 12 weist eine hohe thermische Leitfähigkeit zur verbesserten Wärmeabfuhr aus der Bremstrommel sowie ein geringes spezifisches Gewicht auf, um am Fahrzeug Kraftstoff im Betrieb einzusparen.

Um diese verbesserte Anbindung zu erreichen, wird der Reibring 10 zunächst an seiner radialen Außenfläche 14 mechanisch spanend bearbeitet. Mittels geeigneter Schneidwerkzeuge werden in die radiale Außenfläche 14 Nuten 16, 18 eingeschnitten, welche eine Nuttiefe von etwa 0,03 bis 2 mm aufweisen. Diese sind erfindungsgemäß in zwei verschiedenen Abschnitten 20, 22 des Reibrings 10 unterschiedlich ausgebildet. Im ersten axialen Abschnitt 20 sind diese Nuten 16 zum nächstliegenden ersten axialen Ende 24 geneigt ausgebildet und weisen radiale Hinterschneidungen 26 auf. Dies bedeutet, dass die Nutflanken 28, 30, die die Nuten 16 seitlich begrenzen, zu einem Vektor entlang einer Mittelachse X des Reibrings 10, der zum ersten axialen Ende 24 weist, oder zu einer Tangente entlang der gegossenen unbearbeiteten radialen Außenfläche des Reibrings 10 einen Neigungswinkel α von unter 90° einschließen. Im zweiten axialen Abschnitt 22 sind die Nuten 18 in entgegengesetzter Richtung geneigt ausgebildet und weisen ebenfalls radiale Hinterschneidungen 32 auf. Die Nutflanken 34, 36, die die Nuten 18 begrenzen, weisen entsprechend zu einem Vektor entlang einer Mittelachse X des Reibrings 10, der zum ersten axialen Ende 24 weist, einen Neigungswinkel α von über 90° auf.

Die Nuten 16, 18 sind jeweils als Gewindenuten ausgeführt, könnten jedoch auch als Einzelnuten, die in Radialrichtung verlaufen, ausgeführt werden. Das Ausführungsbeispiel zeigt eine besonders vorteilhafte Ausbildung dieser Nuten, 16, 18, denn diese wiesen einen sich über die Höhe des Reibrings 10 ändernden Neigungswinkel α auf. Dieser sinkt im ersten Abschnitt 20 mit geringer werdendem Abstand zum nächstliegenden ersten axialen Ende 24, während er im zweiten axialen Abschnitt 22 mit größer werdendem Abstand zum ersten axialen Ende steigt oder anders ausgedrückt im zweiten axialen Abschnitt 22 bezogen auf einen Vektor, der zum zweiten entgegengesetzten axialen Ende 38 weist, mit kürzer werdendem Abstand zu diesem entgegengesetzten zweiten axialen Ende 38 ebenfalls sinkt. Die Auslegung dieser Neigungswinkeländerung erfolgt bevorzugt abhängig von den thermischen Ausdehnungskoeffizienten der beiden verwendeten Materialien in der Weise, dass die bei der Abkühlung nach dem Angießen entstehenden Aufschrumpfkräfte, die sowohl eine axiale Komponente als auch eine radiale Komponente aufweisen möglichst einen gleichen Winkel zur Mittelachse X aufweisen, wie die Nuten 16, 18, wenn man deren Richtung durch die Winkelhalbierende zwischen den jeweiligen Tangenten an die Nutflanken 28, 30, 34, 36 einer Nut 16, 18 definiert. Da die radiale Komponente der entstehenden Aufschrumpfkräfte über die Höhe des Reibrings ungefähr gleich bleibt, während die axialen Aufschrumpfkräfte in Richtung des jeweiligen nächstliegenden axialen Endes 24, 38 steigt, wird der Vektor der resultierenden Aufschrumpfkraft entsprechend ebenfalls im Randbereich an den axialen Enden einen deutlich kleineren Winkel zur Mittelachse X einschließen als im Mittelbereich, in dem die Aufschrumpfkraft ausschließlich radial wirkt. Bei Reibringen 10 üblicher Größe hat es sich dabei herausgestellt, dass der Neigungswinkel α der vorlaufenden Flanke 28, 34 vom Mittelbereich zu den jeweiligen Enden bezogen jeweils auf den Vektor zum nächstliegenden axialen Ende 24, 38 von etwa 60° auf ca. 20° sinken sollte. Der Öffnungswinkel zwischen den Flanken 28, 30, 34, 36 beträgt dabei etwa 30°.

Diese Ausbildung der Nuten 16, 18 bewirkt eine sehr hohe Verbundfestigkeit zwischen dem Reibring 10 und dem Trommelkörper 12. Um neben dieser hohen mechanischen Verklammerung auch eine gute metallurgische Bindung zu schaffen, wird der Reibring 10 an seiner radialen Außenfläche 14 vor dem Angießen des Trommelkörpers noch beschichtet. Diese Beschichtung 40 weist eine Dicke von 0,01 bis 8 mm auf und wird entweder durch thermisches Spritzen oder galvanisches Aufbringen einer Aluminiumbasislegierung erzeugt. Alternativ kann die Oberfläche auch verzinkt werden, beispielsweise durch Feuerverzinken in einem Bad einer Zink- oder Zinkbasislegierung. Wird das thermische Spritzverfahren verwendet, kann zuvor eine Oberflächenaktivierung durch Strahlen oder chemische Prozesse durchgeführt werden. Bei der galvanischen Beschichtung empfiehlt sich eine Vorbehandlung durch Ätzen, Beizen oder einem Schichtauftrag mit einem Elektrolyten gegebenenfalls mit einer zusätzlichen Nickelhaftschicht.

Nach dem Aufbringen dieser Beschichtung 40 kann der Trommelkörper 12 nunmehr an den Reibring 10 insbesondere im Druckgussverfahren angegossen werden. Dieses ermöglicht eine sehr gute Füllung der Nuten mit dem Umgusswerkstoff, der, um Korrosion zu vermeiden, möglichst kein Kupfer oder Nickel enthalten sollte.

Bei Verwendung anderer Angussverfahren, wie dem Niederdruckgussverfahren oder Schwerkraftgussverfahren, sollten möglichst die Steigungen der vorlaufenden und der nachlaufenden Flanken 28, 30, 34, 36 etwa gleich sein und die Profiltiefe angepasst werden, um dennoch eine Füllung der Nuten möglichst ohne Lufteinschlüsse sicher zu stellen.

Eine derartig hergestellte Bremstrommel weist eine sowohl mechanisch als auch metallurgisch exzellente Bindung zwischen dem Trommelkörper und dem Reibring auf. Zusätzlich werden unerwünschte Korrosionsprozesse vermeiden und eine sehr gute Wärmeableitung sichergestellt. Des Weiteren weist eine mittels des erfindungsgemäßen Verfahrens hergestellte Bremstrommel ein geringes Gewicht bei hoher Lebensdauer und guten Bremsleistungen auf.

Es sollte deutlich sein, dass der Schutzbereich der Anmeldung nicht auf das beschriebene Ausführungsbeispiel beschränkt ist. Insbesondere muss der Reibring nicht über seine gesamte Höhe mit einem Nutenprofil ausgestattet werden, sondern ein dritter Abschnitt vorliegen, in dem keine Nuten ausgebildet sind. Selbstverständlich sind auch konstruktive Änderungen bezüglich der einzelnen Bauteile und der korrespondierenden Flächen denkbar. Neben den Gewindeprofilen können auch Einzelnuten eingebracht werden.

## Patentansprüche

1. Bremstrommel für ein Fahrzeug mit
einem Reibring (10), der an seiner radialen Außenfläche (14) entlang des Umfangs verlaufende Nuten (16, 18) aufweist und an dessen radialer Außenfläche (14) eine Beschichtung (40) ausgebildet ist wobei die Nuten (16, 18) in radialer Richtung betrachtet Hinterschneidungen (26, 32) aufweisen,
einem Trommelkörper (12), der an die radiale Außenfläche des Reibrings (10) angegossen ist, so dass die Nuten (16, 18) mit dem Material des Trommelkörpers (12) gefüllt sind,
**dadurch gekennzeichnet, dass**
am Reibring (10) ein erster axialer Abschnitt (20) ausgebildet ist, in dem die Nuten (16) zum nächstliegenden ersten axialen Ende (24) des Reibrings (10) geneigt ausgebildet sind und ein zweiter axialer Abschnitt (22) ausgebildet ist, in dem die Nuten (18) zur zum ersten Abschnitt (20) entgegengesetzten Richtung geneigt ausgebildet sind.

2. Bremstrommel für ein Fahrzeug nach Anspruch 1,
**dadurch gekennzeichnet, dass**
der Neigungswinkel (α) der Nuten (16) zur Mittelachse (X) des Reibrings (10) in Richtung des ersten axialen Endes (24) betrachtet im ersten Abschnitt (20) mit kürzer werdendem Abstand zum nächstliegenden ersten axialen Ende (24) sinkt und der Neigungswinkel (α) der Nuten (18) im zweiten Abschnitt (22) in Richtung des zweiten axialen Endes (38) betrachtet mit kürzer werdendem Abstand zum entgegengesetzten zweiten axialen Ende (38) sinkt.

3. Bremstrommel für ein Fahrzeug nach Anspruch 1 oder 2,
**dadurch gekennzeichnet, dass**
der Reibring (10) einen dritten Abschnitt aufweist, in dem keine Nuten ausgebildet sind und der sich vom zweiten Abschnitt (22) aus zum entgegensetzten zweiten axialen Ende (38) erstreckt.

4. Bremstrommel für ein Fahrzeug nach einem der vorhergehenden Ansprüche,
**dadurch gekennzeichnet, dass**
die Nuten (16, 18) in Umfangrichtung verlaufen und eine Tiefe von 0,03 bis 2mm aufweisen.

5. Bremstrommel für ein Fahrzeug nach einem der vorhergehenden Ansprüche,
**dadurch gekennzeichnet, dass**
die Nuten (16) im ersten Abschnitt (20) gegenläufig zu den Nuten (18) im zweiten Abschnitt (22) gewindeförmig in Umfangrichtung verlaufen.

6. Bremstrommel für ein Fahrzeug nach einem der Ansprüche 1 bis 4,
**dadurch gekennzeichnet, dass**
die Nuten (16) im ersten Abschnitt (20) gegenläufig zu den Nuten (18) im zweiten Abschnitt (22) und benachbarte Nuten (18) in einem konstanten Abstand zueinander axial hintereinander liegend zueinander angeordnet sind.

7. Bremstrommel für ein Fahrzeug nach einem der vorhergehenden Ansprüche,
**dadurch gekennzeichnet, dass**
die Nuten (16, 18) einen Öffnungswinkel zwischen den beiden begrenzenden Flanken (28, 30; 34, 36) von 20° bis 40° aufweisen.

8. Bremstrommel für ein Fahrzeug nach einem der vorhergehenden Ansprüche,
**dadurch gekennzeichnet, dass**
die Nuten (16, 18) einen Neigungswinkel (α) zwischen der Mittelache (x) und der vorlaufenden Flanke (28, 34) der Nut (16, 18) von 20° bis 60° aufweisen.

9. Bremstrommel für ein Fahrzeug nach einem der vorhergehenden Ansprüche,
**dadurch gekennzeichnet, dass**
der Neigungswinkel (α) der vorlaufenden Flanke (28, 34) jeder Nut (16, 18) dem Neigungswinkel (α) der nachlaufenden Flanke (30, 36) entspricht.

10. Bremstrommel für ein Fahrzeug nach einem der vorhergehenden Ansprüche,
**dadurch gekennzeichnet, dass**
der Reibring (10) aus Grauguss, Stahl, einem Metall-Matrix-Verbundwerkstoff oder einer Schwermetalllegierung hergestellt ist und der Trommelkörper (12) aus einer Aluminiumsilizium- oder einer Aluminium-Magnesium-Legierung hergestellt ist.

11. Bremstrommel für ein Fahrzeug nach Anspruch 10,
**dadurch gekennzeichnet, dass**
die Legierung des Trommelkörpers (12) einen Nickelanteil und einen Kupferanteil von unter 0,05 Gew.% aufweist.

12. Bremstrommel für ein Fahrzeug nach einem der vorhergehenden Ansprüche,
**dadurch gekennzeichnet, dass**
die Beschichtung (40) eine Schichtdicke von 0,01mm bis 0,8mm aufweist und aus Zink, einer Zinkbasislegierung, Nickel oder einer Aluminiumbasislegierung besteht.

13. Verfahren zur Herstellung einer Bremstrommel nach einem der vorhergehenden Ansprüche mit folgenden Schritten:
- Gießen eines Reibrings (10) aus Grauguss, Stahl, einem Metall-Matrix-Verbundwerkstoff oder einer Schwermetalllegierung
- Mechanisches Bearbeiten einer radialen Außenfläche (14) des Reibrings (10) zur Einbringung von Nuten (16, 18)
- Beschichten der mechanisch bearbeiteten Außenfläche (14) mit Zink oder einer Zinkbasislegierung, Nickel oder einer Aluminiumbasislegierung
- Angießen eines Trommelkörpers (12) aus einer Aluminium-Silizium-Legierung oder einer Aluminium-Magnesium-Legierung an die radiale Außenfläche (14) des Reibrings (10)
**dadurch gekennzeichnet, dass**
die Nuten (16, 18) in einem ersten Abschnitt (20) und in einem zweiten Abschnitt (22) gegenläufig geneigt zueinander in die radiale Außenfläche (14) des Reibrings (10) eingebracht werden und dabei in radialer Richtung betrachtet Hinterschneidungen (26, 32) ausbilden.

14. Verfahren zur Herstellung einer Bremstrommel nach Anspruch 13,
**dadurch gekennzeichnet, dass**
die Beschichtung (40) durch thermisches Spritzen, galvanische Prozesse oder durch Verzinken aufgebracht wird.

15. Verfahren zur Herstellung einer Bremstrommel nach einem der Ansprüche 13 oder 14,
**dadurch gekennzeichnet, dass**
der Trommelkörper (12) in einem Druckgussverfahren hergestellt wird.

16. Verfahren zur Herstellung einer Bremstrommel nach einem der Ansprüche 13 bis 15,
**dadurch gekennzeichnet, dass**
vor dem thermischen Spritzen der Beschichtung (40) die radiale Außenfläche (14) gestrahlt oder chemisch behandelt wird.

17. Verfahren zur Herstellung einer Bremstrommel nach einem der Ansprüche 13 bis 15,
**dadurch gekennzeichnet, dass**
vor dem galvanischen Aufbringen der Beschichtung (40) die radiale Außenfläche (14) geätzt oder gebeizt und anschließend mit Elektrolyten behandelt wird.

18. Verfahren zur Herstellung einer Bremstrommel nach Anspruch 17,
**dadurch gekennzeichnet, dass**
eine Nickelschicht auf die radiale Außenfläche (14) vor dem galvanischen Beschichten aufgetragen wird.

## Claims

1. A brake drum for a vehicle, comprising
a friction ring (10) which includes grooves (16, 18) on its radial outer surface (14) along the circumference and a coating (40) formed on its radial outer surface (14), wherein the grooves (16, 18) comprise undercuts (26, 32) as seen in the radial direction
a drum body (12) which is cast onto the radial outer surface of the friction ring (10) such that the grooves (16, 18) are filled with the material of the drum body (12),
**characterized in that**
at the friction ring (10) a first axial segment (20) is formed in which the grooves (16) are introduced such that they are inclined relative to the closest first axial end (24) of the friction ring (10), and a second axial segment (22) is formed in which the grooves (18) are introduced such that they are inclined in the direction opposite to that of the first segment (20).

2. The brake drum for a vehicle according to claim 1,
**characterized in that**
the inclination angle (α) of the grooves (16) relative to the center axis (X) of the friction ring (10) is reduced in the first segment (20) with a decreasing distance to the closest first axial end (24), as seen in the direction of the first axial end (24), and the inclination angle (α) of the grooves (18) in the second segment (22) is reduced with a decreasing distance to the opposite second axial end (38), as seen in the direction of the second axial end (38).

3. The brake drum for a vehicle according to claim 1 or 2,
**characterized in that**
the friction ring (10) comprises a third segment in which no grooves are formed and which extends from the second segment (22) to the opposite second axial end (38).

4. The brake drum for a vehicle according to any one of the preceding claims,
**characterized in that**
the grooves (16, 18) extend in the circumferential direction and have a depth of 0.03 to 2 mm.

5. The brake drum for a vehicle according to any one of the preceding claims,
**characterized in that**
the grooves (16) in the first segment (20) extend in an opposite direction to the grooves (18) in the second segment (22) in a thread-type manner in the circumferential direction.

6. The brake drum for a vehicle according to any one of claims 1 to 4,
**characterized in that**
the grooves (16) in the first segment (20) are arranged in the opposite direction to the grooves (18) in the second segment (22) and adjacent grooves (18) are arranged at a constant distance to each other such that they are disposed one behind the other.

7. The brake drum for a vehicle according to any one of the preceding claims,
**characterized in that**
the grooves (16, 18) have an opening angle of 20° to 40° between the two defining flanks (28, 30; 34, 36).

8. The brake drum for a vehicle according to any one of the preceding claims,
**characterized in that**
the grooves (16, 18) have an inclination angle (α) between the center axis (X) and the leading flank (28, 34) of the groove (16, 18) of 20° to 60°.

9. The brake drum for a vehicle according to any one of the preceding claims,
**characterized in that**
the inclination angle (α) of the leading flank (28, 34) of each groove (16, 18) corresponds to the inclination angle (α) of the trailing flank (30, 36).

10. The brake drum for a vehicle according to any one of the preceding claims,
**characterized in that**
the friction ring (10) is made from gray cast iron, steel, a metal-matrix compound material or a heavy-metal alloy and the drum body (12) is made from an aluminum silicon or an aluminum magnesium alloy.

11. The brake drum for a vehicle according to claim 10,
**characterized in that**
the alloy of the drum body (12) comprises a nickel fraction and a copper fraction of smaller than 0.05 % by weight.

12. The brake drum for a vehicle according to any one of the preceding claims,
**characterized in that**
the coating (40) has a layer thickness from 0.01 mm to 0.8 mm and is made from zinc, an alloy on a zinc basis, nickel or an alloy on an aluminum basis.

13. A method for producing a brake drum according to any one of the preceding claims, comprising the following steps:
- casting a friction ring (10) from gray cast iron, steel, a metal-matrix compound material or a heavy-metal alloy,
- mechanically machining a radial outer surface (14) of the friction ring (10) for introducing grooves (16, 18),
- coating the mechanically machined outer surface (14) with zinc or an alloy on a zinc basis, nickel or an alloy on an aluminum basis,
- casting a drum body (12) of from an aluminum silicon alloy or an aluminum magnesium alloy onto the radial outer surface (14) of the friction ring (10),
**characterized in that**
the grooves (16, 18) in a first segment (20) and in a second segment (22) are introduced into the radial outer surface (14) of the friction ring (10) such that they are inclined in opposite directions to each other and form undercuts (26, 32) as seen in the radial direction.

14. The method for producing a brake drum according to claim 13,
**characterized in that**
the coating (40) is applied by thermal spraying, galvanic processes or zinc coating.

15. The method for producing a brake drum according to any one of claims 13 or 14,
**characterized in that**
the drum body (12) is produced by a pressure casting process.

16. The method for producing a brake drum according to any one of claims 13 to 15,
**characterized in that**
prior to the thermal spraying of the coating (40) the radial outer surface (14) is blasted or chemically treated.

17. The method for producing a brake drum according to any one of claims 13 to 15,
**characterized in that**
prior to galvanically applying the coating (40) the radial outer surface (14) is etched or pickled and subsequently treated with electrolytes.

18. The method for producing a brake drum according to claim 17,
**characterized in that**
a nickel layer is applied to the radial outer surface (14) prior to the galvanic coating.

## Revendications

1. Tambour de frein pour véhicule comportant
une bague de friction (10) avec des rainures (16, 18) sur sa surface extérieure radiale (14), qui s'étendent le long de la circonférence et un revêtement (40) formé sur sa surface extérieure radiale (14), les rainures (16, 18) ayant des contre-dépouilles (26, 32) vus dans la direction radiale,
un corps de tambour (12) coulé sur la surface extérieure radiale de la bague de friction (10) de sorte que les rainures (16, 18) sont remplies de la matière du corps de tambour (12),
**caractérisé en ce que**
une première section axiale (20) est formée sur la bague de friction (10), dans laquelle section les rainures (16) sont formées inclinées vers la première extrémité axiale (24) la plus proche de la bague de friction (10), et une deuxième section axiale (22) est formée, dans laquelle les rainures (18) sont inclinées dans la direction opposée à la première section (20).

2. Tambour de frein pour véhicule selon la revendication 1, **caractérisé en ce que** l'angle d'inclinaison (α) des rainures (16) par rapport à l'axe central (X) de la bague de friction (10), vue en direction de la première extrémité axiale (24), diminue dans la première section (20) à mesure que la distance de la première extrémité axiale (24) la plus proche devient plus courte et l'angle d'inclinaison (α) des rainures (18), vue dans la direction de la deuxième extrémité axiale (38), diminue dans la deuxième section (22) à mesure que la distance de la deuxième extrémité axiale opposée (38) devient plus courte.

3. Tambour de frein pour véhicule selon la revendication 1 ou 2, **caractérisé en ce que** la bague de friction (10) comporte une troisième section dans laquelle aucune rainure n'est formée et qui s'étend de la deuxième section (22) jusqu'à la deuxième extrémité axiale opposée (38).

4. Tambour de frein pour véhicule selon l'une quelconque des revendications précédentes, **caractérisé en ce que** les rainures (16, 18) s'étendent dans la direction circonférentielle et présentent une profondeur de 0,03 à 2 mm.

5. Tambour de frein pour véhicule selon l'une quelconque des revendications précédentes, **caractérisé en ce que** les rainures (16) dans la première section (20) s'étendent en sens contraire aux rainures (18) dans la deuxième section (22) sous la forme d'un filetage dans la direction circonférentielle.

6. Tambour de frein pour véhicule selon l'une des revendications 1 à 4, **caractérisé en ce que** les rainures (16) de la première section (20) sont disposées en sens contraire aux gorges (18) dans la deuxième section (22) et les gorges adjacentes (18) sont disposées axialement l'une derrière l'autre à distance constante.

7. Tambour de frein pour véhicule selon l'une quelconque des revendications précédentes, **caractérisé en ce que** les rainures (16, 18) comportent un angle d'ouverture entre les deux flancs de délimitation (28, 30; 34, 36) de 20°à40°.

8. Tambour de frein pour véhicule selon l'une quelconque des revendications précédentes, **caractérisé en ce que** les rainures (16, 18) comportent un angle d'inclinaison (α) entre l'axe central (x) et le flanc antérieur (28, 34) de la rainure (16, 18) de 20 ° à 60 °.

9. Tambour de frein pour véhicule selon l'une quelconque des revendications précédentes, **caractérisé en ce que** l'angle d'inclinaison (α) du flanc antérieur (28, 34) de chaque rainure (16, 18) correspond à l'angle d'inclinaison (α) du flanc postérieur (30, 36).

10. Tambour de frein pour véhicule selon l'une quelconque des revendications précédentes, **caractérisé en ce que** la bague de friction (10) est fabriquée en fonte grise, en acier, en matériau composite à matrice métallique ou en alliage de métal lourd, et le corps de tambour (12) est en alliage aluminium-silicium ou en alliage aluminium-magnésium.

11. Tambour de frein pour véhicule selon la revendication 10, **caractérisé en ce que** l'alliage du corps de tambour (12) a une teneur en nickel et une teneur en cuivre inférieure à 0,05% en poids.

12. Tambour de frein pour véhicule selon l'une quelconque des revendications précédentes, **caractérisé en ce que** le revêtement (40) a une épaisseur de couche de 0,01 mm à 0,8 mm et est constitué de zinc, d'un alliage à base de zinc, de nickel ou d'un alliage à base d'aluminium.

13. Procédé de fabrication d'un tambour de frein selon l'une quelconque des revendications précédentes avec les étapes suivantes:
- coulée d'une bague de friction (10) en fonte grise, en acier, en matériau composite à matrice métallique ou en alliage de métal lourd
- usinage d'une surface extérieure radiale (14) de la bague de friction (10) pour former des rainures (16, 18)
- revêtement de la surface extérieure (14) usinée avec du zinc ou un alliage à base de zinc, du nickel ou un alliage à base d'aluminium
- coulage d'un corps de tambour (12) en alliage aluminium-silicium ou en alliage aluminium-magnésium sur la surface extérieure radiale (14) de la bague de friction (10),
**caractérisé en ce que**
les rainures (16, 18) sont formées dans une première section (20) et dans une deuxième section (22) inclinées en sens contraire dans la surface extérieure radiale (14) de la bague de friction (10) et, vues dans la direction radiale, dans le même temps forment des contre-dépouilles (26, 32).

14. Procédé de fabrication d'un tambour de frein selon la revendication 13, **caractérisé en ce que** le revêtement (40) est appliqué par projection thermique, procédés galvaniques ou par galvanisation.

15. Procédé de fabrication d'un tambour de frein selon l'une des revendications 13 ou 14, **caractérisé en ce que** le corps de tambour (12) est fabriqué dans un processus de moulage sous pression.

16. Procédé de fabrication d'un tambour de frein selon l'une des revendications 13 à 15, **caractérisé en ce que** la surface extérieure radiale (14) est grenaillée ou traitée chimiquement avant la projection thermique du revêtement (40).

17. Procédé de fabrication d'un tambour de frein selon l'une des revendications 13 à 15, **caractérisé en ce qu'**avant l'application galvanique du revêtement (40), la surface extérieure radiale (14) est gravée ou décapée puis traitée avec des électrolytes.

18. Procédé de fabrication d'un tambour de frein selon la revendication 17, **caractérisé en ce qu'**une couche de nickel est appliquée sur la surface extérieure radiale (14) avant le revêtement galvanique.
